(19) Europäisches Patentamt
European Patent Office
Office européen des brevets

(11) **EP 4 015 245 A1**

(12) **EUROPEAN PATENT APPLICATION**

(43) Date of publication:
**22.06.2022 Bulletin 2022/25**

(21) Application number: **21203853.3**

(22) Date of filing: **21.10.2021**

(51) International Patent Classification (IPC):
***B60C 11/03*** (2006.01)     ***B60C 99/00*** (2006.01)

(52) Cooperative Patent Classification (CPC):
**B60C 11/0332; B60C 99/006;** B60C 2011/0355

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.12.2020 JP 2020209583**

(71) Applicant: **Sumitomo Rubber Industries, Ltd.
Kobe-shi, Hyogo-ken 651-0072 (JP)**

(72) Inventor: **HIGUCHI, SHOSHI
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(54) **TIRE**

(57)     A tire has a tread portion provided with circumferential grooves. The ground contact area of the tread portion has ground contact lengths in the tire circumferential direction which include a crown ground contact length LC at the tire equator C and a shoulder ground contact length LS at a position spaced apart from the tire equator c by 80% of a half tread width Tw. The crown ground contact length LC is 0.95 to 1.05 times the shoulder ground contact length LS. Groove depths of the circumferential grooves are proportional to ground contact lengths of the ground contact area at the respective axial positions of the circumferential grooves.

**Description**

**FIELD OF THE INVENTION**

The present disclosure relates to a tire having a tread portion.

**BACKGROUND OF THE INVENTION**

Conventionally, a tire having a tread portion provided with circumferential grooves extending in the tire circumferential direction has been known.

For example, Patent Document 1 below discloses a tire improved in wear resistance by specifically defining the profile of a tread portion in which a plurality of main grooves extending in the tire circumferential direction are formed.

Patent Document 1: Japanese Patent Application Publication No. 2019-182339

**SUMMARY OF THE INVENTION**

**PROBLEMS TO BE SOLVED BY THE INVENTION**

In the tire of Patent Document 1, since the groove depths of the main grooves are the same and relatively large, the rigidity of the tread portion is reduced by the main grooves, therefore, the tire is required to be improved in the rigidity of the tread portion in view of the steering stability performance.

In view of the above circumstances, the present disclosure was made, and a main object of the present disclosure is to provide a tire in which steering stability performance can be improved, while maintaining excellent wear resistance performance.

**MEANS FOR SOLVING THE PROBLEMS**

According to the present disclosure, a tire comprises a tread portion provided with circumferential grooves extending in the tire circumferential direction, wherein
when the tire mounted on a normal rim and inflated to a normal internal pressure is contacted with a horizontal flat surface at a camber angle of 0 degree and loaded with a normal load,

> the tread portion has a ground contact area having ground contact lengths in the tire circumferential direction associated with respective positions in the tire axial direction, and
> a half tread width which is a distance from the tire equator to a tread edge which is the axially outermost end of the ground contact area, and
> the ground contact lengths include
> a crown ground contact length LC at the tire equator, and a shoulder ground contact length at a position spaced apart from the tire equator by an axial distance of 80% of the half tread width,
> wherein
>
>> the crown ground contact length LC is 0.95 to 1.05 times the shoulder ground contact length, and
>> groove depths of the circumferential grooves are proportional to ground contact lengths of the ground contact area at the respective axial positions of the circumferential grooves.

**EFFECTS OF THE INVENTION**

In the tire according to the present disclosure, as the crown ground contact length is 0.95 to 1.05 times the shoulder ground contact length, the tire has a large ground contact area and can improve cornering power, therefore, it is possible to improve steering stability performance.

Further, as the groove depths of the circumferential grooves are proportional to ground contact lengths of the ground contact area at the respective axial positions of the circumferential grooves, the groove depths can be prevented from becoming excessively large for the amount of wear which is different depending on the axial positions, and the rigidity of the tread portion is improved to improve the cornering power. Therefore, the tire of the present disclosure can be improved in steering stability performance while maintaining excellent wear resistance performance.

**BRIEF DESCRIPTION OF THE DRAWINGS**

FIG. 1 is a cross-sectional view of a tread portion of a tire as an embodiment of the present disclosure.

FIG. 2 is a diagram showing a ground contact area or footprint of the tire.

FIG. 3 is a cross-sectional view of a tread portion of a tire as another embodiment of the present disclosure.

FIG. 4 is a flowchart showing a method of setting a groove depth as an embodiment of the present disclosure.

FIG. 5 is a cross-sectional view of the tread portion for explaining the third step and the fourth step in another embodiment.

**DETAILED DESCRIPTION OF THE INVENTION**

The present disclosure can be applied to various tires such as a pneumatic tire for passenger cars, a pneumatic tire for heavy load vehicles, a pneumatic tire for two-wheeled vehicles, a non-pneumatic tire so called airless tire and the like. In particular, the present disclosure is suitably applied to a pneumatic tire for passenger cars.

Taking a pneumatic tire for passenger cars as an example, an embodiment of the present disclosure will now be described in detail in conjunction with accompanying drawings.

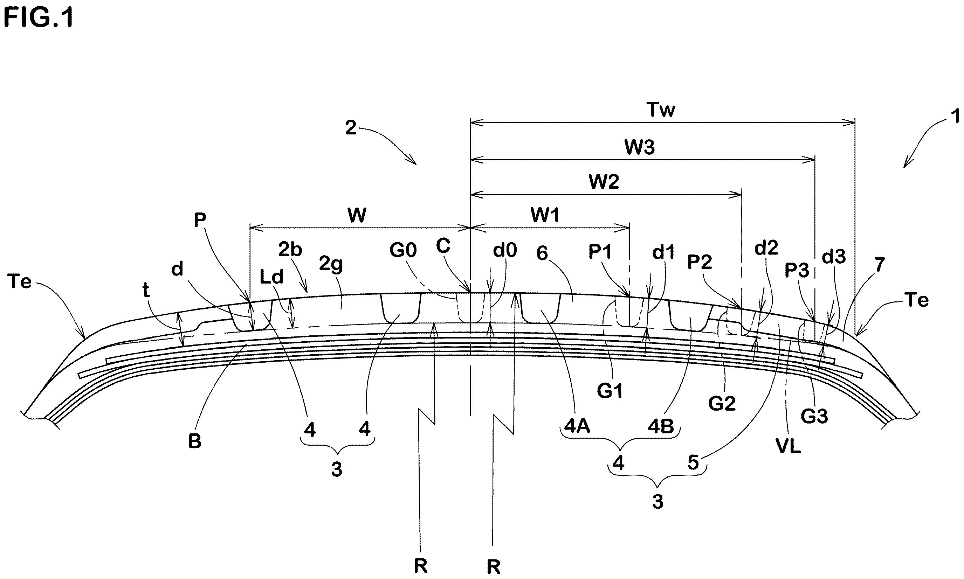

FIG. 1 is a tire meridian cross-sectional view of a tread portion 2 of a tire 1 as an embodiment under its normal state.

Here, when the tire 1 is a pneumatic tire, the "normal state" is a state of the tire 1 which is mounted on a normal rim and inflated to a normal internal pressure but load with no tire load.

In the present specification, the dimensions and the like of portions of the tire 1 are values measured in the normal state unless otherwise noted.

The "normal rim" is a wheel rim specified for the tire by a standard included in a standardization system on which the tire is based, for example, the "normal wheel rim" in JATMA, "Design Rim" in TRA, and "Measuring Rim" in ETRTO. If there is no standardization system including standards on which the tire 1 is to be based, the "normal rim" is a wheel rim specified by the tire manufacturer or the like.

The "normal inner pressure" is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO. If there is no standardization system including standards on which the tire 1 is to be based, the "normal inner pressure" is air pressure specified by the tire manufacturer or the like.

As shown in FIG. 1, the tire 1 of the present embodiment has a tread portion 2 contacting with the ground during running.

The tread portion 2 in the present embodiment is provided with grooves 3.

The grooves 3 include a plurality of circumferential grooves 4, in this example, four circumferential grooves 4, each extending in the tire circumferential direction.

The circumferential grooves 4 in the present embodiment include a shoulder circumferential groove 4B, and a crown circumferential groove 4A disposed on the tire equator C side of the shoulder circumferential groove 4B.

The grooves 3 may include lateral grooves 5 extending in a tire axial direction.

Such tire 1 has good drainage performance when running on wet road surfaces.

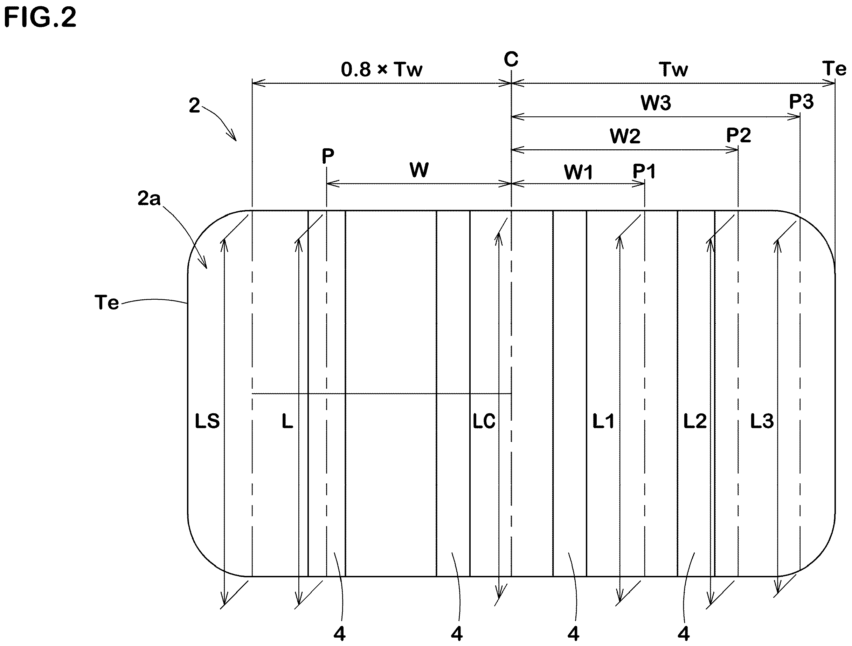

FIG. 2 is a schematic view showing a ground contact area 2a of the tread portion 2.

As shown in FIG. 2, in the tread portion 2 of the present embodiment, when the tire under the normal state is contacted with a horizontal flat plane at a camber angle of 0 degree and loaded with a normal load, the ground contact area 2a has ground contact lengths L in the tire circumferential direction at respective positions P in the tire axial direction.

The ground contact area 2a of the present embodiment has a half tread width Tw which is a distance from the tire equator C to a tread edge Te which is an outermost end of the ground contact area 2a in the tire axial direction.

The tire equator C is the center position in the tire axial direction between the tread edges Te on both sides.

Here, the "normal load" is a load specified for the tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. If there is no standardization system including standards on which the tire 1 is to be based, the "normal load" is a load specified by the tire manufacturer or the like.

The ground contact lengths L include a crown ground contact length LC at the tire equator C, and a shoulder ground contact length LS at an axial position P1 spaced apart from the tire equator C by a distance W1 of 80% of the half tread width Tw.

In the present embodiment, the crown ground contact length LC is in a range from 0.95 to 1.05 times the shoulder ground contact length LS. Since such tire 1 has a large ground contact area and can improve cornering power, it is possible to improve steering stability performance.

As shown in FIGS. 1 and 2, the circumferential grooves 4 have groove depths d (d1, d2, d3) respectively which are set to be proportional to the ground contact lengths L (L1, L2, L3) at the axial positions P (P1, P2, P3) at which the circumferential grooves 4 are formed, respectively.

In such circumferential grooves 4, the groove depths d can be prevented from becoming excessively large for the amount of wear which is different depending on the axial positions P, therefore, the rigidity of the tread portion 2 is improved to improve the cornering power. Thus, the tire 1 of the present embodiment can be improved in steering stability performance while maintaining the excellent wear resistance performance.

The ground contact lengths L include a first ground contact length L1 at a first axial position P1 spaced apart from the tire equator C in the tire axial direction, and a second ground contact length L2 at a second axial position P2 axially outside the first axial position P1. Such first ground contact length L1 and second ground contact length L2 are used to define the undermentioned first virtual groove G1 and second virtual groove G2.

In the present embodiment, as shown in FIG. 1, in the meridian cross section of the tire under the normal state with no tire load, a virtual line VL for defining the groove depths d of the circumferential grooves 4 is defined in the tread portion 2.

It is desirable that the virtual line VL is defined based on a reference virtual groove G0, a first virtual groove G1 and a second virtual groove G2 which are defined in the tread portion 2 in the meridian cross section of the tire under the normal state with no tire load.

The reference virtual groove G0, the first virtual groove G1 and the second virtual groove G2 are virtual circumferential grooves defined at the tire equator C, the first axial position P1 and the second axial position P2, respectively.

Such virtual line VL can optimize the groove depth d of each circumferential groove 4 for the amount of wear, and can improve the rigidity of the tread portion 2, thereby, it is possible to improve the steering stability performance of the tire 1.

Further, the virtual line VL helps to reduce the thickness t of the tread rubber 2g of the tread portion 2 to reduce the weight of the tire 1, thereby, it is possible to improve the low-fuel consumption performance of the tire 1.

Here, the thickness t of the tread rubber 2g is the distance between the radially outer surface 2b of the tread portion 2 and a tread reinforcing layer (belt) B disposed in the tread portion 2.

The reference virtual groove G0 is defined to have a groove depth d0 which is predetermined for the axial position of the tire equator C.

In the present embodiment, the groove depth d0 of the reference virtual groove G0 is defined based on the groove depth d of the circumferential groove 4 which is formed most adjacently to the tire equator C. Specifically, the groove depth d0 of the reference virtual groove G0 is defined as the radial distance measured at the tire equator C between the radially outer surface 2b and a curve line which extends with the same radius of curvature R as the radially outer surface 2b at the tire equator C while contacting with the groove bottoms of the crown circumferential grooves 4A adjacent to the tire equator C.

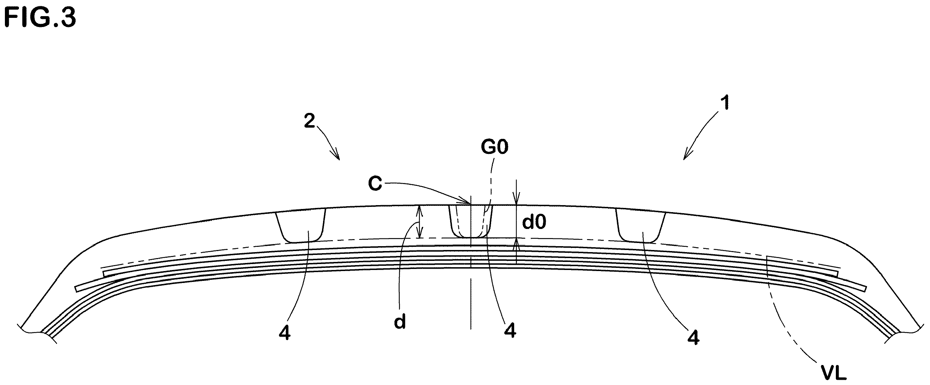

FIG. 3 shows a tire meridian cross section showing the tread portion 2 of a tire 1 as another embodiment under the normal state.

As shown in FIG. 3, the tread portion 2 of the present embodiment is provided with three circumferential grooves 4. One of the three circumferential grooves 4 is disposed on the tire equator C.

In the present embodiment, the groove depth d0 of the reference virtual groove G0 is defined as the groove depth d of the actual circumferential groove 4 arranged on the tire equator C. The definition of the groove depth d0 of such reference virtual groove G0 is simple and clear.

The number of the circumferential grooves 4 may be, for example, two or five or more.

The groove depth d1 of the first virtual groove G1 is preferably determined by the following equation (1):

$$d1 = (L1 \times d0)/\{L1 + \alpha(LC-L1)\} \quad \text{---} \quad (1)$$

wherein

   d0 is the groove depth of the reference virtual groove,
   LC is the crown ground contact length,
   L1 is the first ground contact length, and
   $\alpha$ is a first correction coefficient.

The groove depth d2 of the second virtual groove G2 is preferably determined by the following equation (2):

$$d2 = (L2 \times d0)/\{L2 + \beta(LC-L2)\} \text{ --- } (2)$$

wherein

    d0 is the groove depth of the reference virtual groove,
    LC is the crown ground contact length,
    L2 is the second ground contact length, and
    $\beta$ is a second correction coefficient.

In the present embodiment, the second correction coefficient $\beta$ is larger than the first correction coefficient $\alpha$. Preferably, the first correction coefficient $\alpha$ is 0.6 to 1.0. Preferably, the second correction coefficient $\beta$ is 1.1 to 1.5.

In the virtual line VL based on such reference virtual groove G0, first virtual groove G1 and second virtual groove G2, the groove depth d of each circumferential groove 4 can be optimized for the amount of wear, which helps to improve the rigidity of the tread portion 2.

In the present embodiment, the virtual line VL is defined so as to contact with the groove bottom of the reference virtual groove G0, the groove bottom of the first virtual groove G1, and the groove bottom of the second virtual groove G2.

In the present embodiment, the groove depth d of each circumferential groove 4 is set in a range from 90% to 110% of the distance Ld from the radially outer surface 2b of the tread portion 2 to the virtual line VL measured at the axial position P of the circumferential groove 4.

Such circumferential groove 4 is prevented from having an excessively large groove depth d for the amount of wear which is different depending on the positions P in the tire axial direction, and thereby the rigidity of the tread portion 2 is improved. Therefore, the tire 1 of the present embodiment can be improved in steering stability performance while maintaining the excellent wear resistance performance.

The first axial position P1 is preferably spaced apart from the tire equator C by an axial distance W1 of from 40% to 55% of the half tread width Tw.

The first axial position P1 in this example is located in a middle land portion 6 defined between the crown circumferential groove 4A and the shoulder circumferential groove 4B.

The second axial position P2 is preferably spaced apart from the tire equator C by an axial distance w2 of from 75% to 80% of the half tread width Tw.

The second axial position P2 in this example is located in a shoulder land portion 7 defined as extending axially outwardly from the shoulder circumferential groove 4B.
when the axial distance W2 is 80% of the half tread width Tw, the second ground contact length L2 is equal to the shoulder ground contact length LS.

The virtual line VL may be defined so as to contact with the groove bottom of the reference virtual groove G0, the groove bottom of the first virtual groove G1, the groove bottom of the second virtual groove G2, and the groove bottom of a third virtual groove G3, for example.

Here, the third virtual groove G3 is a virtual circumferential groove defined at a third axial position P3 spaced apart from the tire equator C by a distance w3 of from 90% to 95% of the half tread width Tw.

By the reference virtual groove G0, the first virtual groove G1, the second virtual groove G2, and the third virtual groove G3, the virtual line VL can be defined more accurately.

In the present embodiment, the ground contact length L includes a third ground contact length L3 at the third axial position P3.

The groove depth d3 of the third virtual groove G3 is preferably determined by the following equation (3):

$$d3 = (L3 \times d0)/\{L3 + \gamma(LC-L3)\} \text{ --- } (3)$$

wherein

    d0 is the groove depth of the reference virtual groove, LC is the crown ground contact length,
    L3 is the third ground contact length, and
    $\gamma$ is a third correction coefficient.

The third correction coefficient $\gamma$ in this example is the same as the second correction coefficient $\beta$.

The third correction coefficient $\gamma$ may be larger than the second correction coefficient $\beta$, for example.

The virtual line VL defined based on such reference virtual groove G0, first virtual groove G1, second virtual groove G2, and third virtual groove G3 can optimize the groove depth d of each circumferential groove 4 for the amount of wear. This helps to improve the rigidity of the tread portion 2.

In the present embodiment, the circumferential grooves 4 include an axially inner first circumferential groove, and an axially outer second circumferential groove.

The first circumferential groove is, for example, the crown circumferential groove 4A. The second circumferential groove is, for example, the shoulder circumferential groove 4B.

In the present embodiment, the groove depth of the second circumferential groove is larger than the groove depth of the first circumferential groove.

In such circumferential grooves 4, when the tread portion 2 is worn, the remaining groove depths become equal. As a result, it is possible to achieve the durability performance as well as the low-fuel consumption performance owing to weight reduction.

In the present embodiment, the tread portion 2 is provided with lateral grooves 5 extending in the tire axial direction.

The groove depth d of the lateral groove 5 at the axial position P is equal to or less than the distance Ld from the radially outer surface 2b to the virtual line VL.

The virtual line VL can optimize the maximum value for the groove depth d of each lateral groove 5.

Maximum values for the groove depths d of the grooves 3 (inclusive of circumferential grooves and lateral grooves) can be determined based on the following equation (4), which is a generalization of the above equations (1) to (3).

In this case, the groove depths d can be determined without defining the virtual line VL, therefore, it is useful when there are few types of grooves 3 and it takes time to define the virtual line VL.

$$d <= (L \times d0 \times 1.1)/\{L + \alpha0(LC-L)\} \ --- \ (4)$$

wherein LC is the crown ground contact length at the tire equator C, L is the ground contact length of the ground contact area 2a measured at the axial position of the groove 3, and $\alpha0$: a correction coefficient.

Next, for the tire 1 whose tread portion is provided with a plurality of circumferential grooves 4 extending in the tire circumferential direction, a method of setting the groove depths d of the circumferential grooves 4 is described with reference to FIGS. 1 to 3.

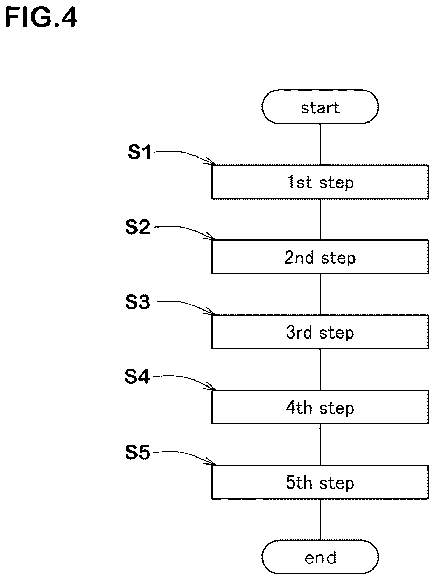

FIG. 4 is a flowchart of the method according to the present embodiment.

In this method, as shown in FIG. 4, a first step S1 of determining the ground contact area 2a of the tread portion 2 when the tire 1 under the normal state is contacted with a horizontal flat plane at a camber angle of 0 degree and loaded with a normal load, is performed.

In the first step S1, the ground contact area 2a may be determined through a simulation using a computer, or an experiment.

In the first step S1, the shape of the ground contact area 2a is obtained accurately.

In the groove depth setting method of the present embodiment, after the first step S1, performed is a second step S2 of obtaining the ground contact length L in the tire circumferential direction of the ground contact area 2a associated with each position P in the tire axial direction of the ground contact area 2a.

In the second step S2 of the present embodiment, at least the crown ground contact length LC and the shoulder ground contact length LS are obtained.

In the second step S2, it is desirable that the first ground contact length L1, the second ground contact length L2 are obtained.

In the second step S2, it may be possible to obtain the third ground contact length L3.

In the second step S2, it is not necessary to obtain the ground contact length L associated with all positions P in the tire axial direction to shorten the calculation time.

In the groove depth setting method of the present embodiment, after the second step S2, there is performed at least a third step S3 of defining the reference virtual groove G0, the first virtual groove G1 and the second virtual groove G2. Further, in the third step S3, for example, the groove depth d0 of the reference virtual groove G0, the groove depth d1 of the first virtual groove G1, and the groove depth d2 of the second virtual groove G2 are obtained.

In the third step S3, for example, the groove depth d3 of the third virtual groove G3 may be further obtained.

In the groove depth setting method of the present embodiment, after the third step S3, there is performed a fourth step S4 of defining the virtual line VL so as to contact with at least the groove bottom of the reference virtual groove G0, the groove bottom of the first virtual groove G1, and the groove bottom of the second virtual groove G2.

In the fourth step S4, the virtual line VL may be defined so as to further contact with the groove bottom of the third virtual groove G3.

In the groove depth setting method of the present embodiment, after the fourth step S4, performed is a fifth step S5 of determining the groove depth d of each circumferential groove 4 so that the groove bottom is located on the virtual line VL.

In such groove depth setting method, the groove depths d of the circumferential grooves 4 can be optimized for the amount of wear which is different depending on the positions in the tire axial direction, and the rigidity of the tread portion 2 can be improved. Therefore, the groove depth setting method can improve the steering stability performance while maintaining the excellent wear resistance performance of the tire 1.

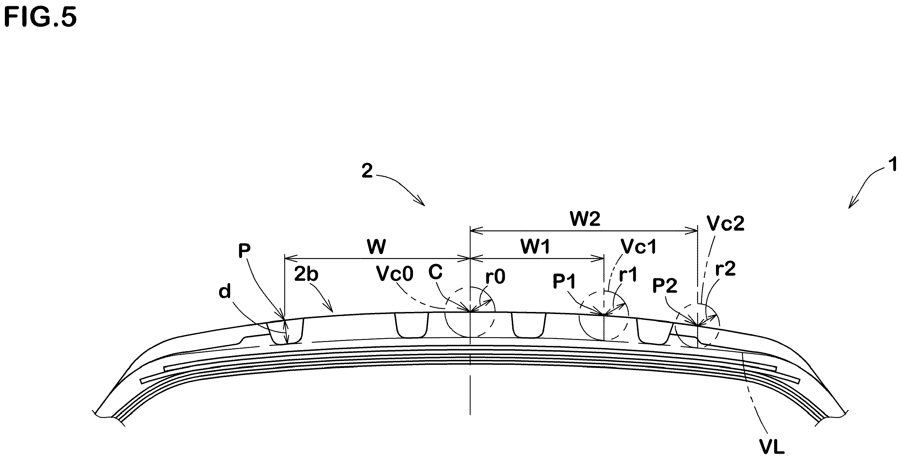

FIG. 5 is a cross-sectional view of the tread portion 2 for explaining a groove depth setting method as another embodiment in which only the third step S3 and the fourth step S4 are different from those of the former embodiment otherwise the same as the former embodiment.

As shown in FIG. 5, in the third step S3, a reference virtual circle Vc0, a first virtual circle Vc1 and a second virtual circle Vc2 each having a center on the radially outer surface 2b of the tread portion 2 are defined instead of the virtual grooves G0, G1 and G2.

The reference virtual circle Vc0 is a circle of which center is positioned at the axial position of the tire equator C and which has a reference radius r0.

The first virtual circle Vc1 is a circle of which center is positioned at the above-mentioned first axial position P1 on the radially outer surface 2b and which has a first radius r1.

The second virtual circle Vc2 is a circle of which center is positioned at the above-mentioned second axial position P2 on the radially outer surface 2b and which has a second radius r2.

The reference radius r0 of the reference virtual circle Vc0 is defined based on the groove depth d of the circumferential groove 4 disposed most adjacently to the tire equator C or the circumferential groove 4 disposed on the tire equator C.

The first radius r1 of the first virtual circle Vc1 and the second radius r2 of the second virtual circle Vc2 are defined, for example, based on the following equations (5) and (6), respectively:

$$r1 = (L1 \times r0)/\{L1 + \alpha(LC-L1)\} \text{ --- } (5)$$

$$r2 = (L2 \times r0)/\{L2 + \beta(LC-L2)\} \text{ --- } (6)$$

wherein

r0 is the reference radius,
LC is the crown ground contact length at the tire equator C,
L1 is the first ground contact length,
L2 is the second ground contact length,
$\alpha$ is the first correction coefficient, and
$\beta$ is the second correction coefficient.

In the fourth step S4 in this example, the virtual line VL is defined so as to contact with the reference virtual circle Vc0, the first virtual circle Vc1 and the second virtual circle Vc2 on the radially inside of the radially outer surface 2b of the tread portion 2.

Such groove depth setting method can simplify the computation and shorten the computation time.

While detailed description has been made of preferable embodiments of the present disclosure, the present disclosure can be embodied in various forms without being limited to the illustrated embodiments.

**Comparison tests**

Based on the structure shown in FIG. 1, pneumatic tires having circumferential grooves were experimentally manufactured as test tires including working examples and comparative example. In the working examples, the groove depths of the circumferential grooves were determined based on the equations (1) and (2).

In the comparative example, the circumferential grooves had the same groove depth.

The specifications are shown in Table 1.

Each tire was tested for the wear resistance performance, steering stability performance, noise performance and low-fuel consumption performance.

The common specifications of the test tires and test methods are as follows.

< Common specifications >

Tire size: 255/65R18
Rim size: 18x7.5J

< Wear resistance performance test >

Each test tire was attached to all wheels of a test vehicle, and after the vehicle had run for 20000 km on a dry paved road surface, tread wear was measured at different axial positions to obtain the amount of wear at the axial position where the wear was most progressed.

The obtained results are indicated in Table 1 by an index based on Comparative Example being 100, wherein the larger the value, the less the wear progresses, namely, the better the wear resistance performance.

< Steering stability performance test >

Using a flat belt tester, the cornering power of each test tire was measured when the tire mounted on a normal rim, inflated to a normal internal pressure and load with a normal tire load was running on the belt with a slip angle of 1 degree at a speed of 30 km/h.

The results are indicated in Table 1 by an index based on Comparative Example being 100, wherein the larger the value, the larger the cornering power, namely, the better the steering stability performance.

< Noise performance test >

Each test tire was attached to all wheels of a test vehicle, and the pass-by noise was measured outside the test vehicle when running on a noise measuring road surface of a tire test course. The results are indicated in Table 1 by an index based on Comparative Example being 100, wherein the larger the value, the smaller the noise, namely, the better the noise performance.

< Low-fuel consumption performance test >

The weight of each test tire was measured.

The results are indicated in Table 1 by an index based on Comparative Example being 100, wherein the larger the value, the lighter the weight, namely, the better the low-fuel consumption performance.

Table 1

| tire | comparative example | working example 1 | working example 2 | working example 3 |
|---|---|---|---|---|
| correction coefficient $\alpha$ | -- | 0.6 | 0.8 | 1.0 |
| correction coefficient $\beta$ | -- | 1.1 | 1.3 | 1.5 |
| Wear Resistance Performance | 100 | 99 | 103 | 105 |
| Steering stability performance | 100 | 103 | 105 | 107 |
| Noise performance | 100 | 100 | 100 | 97 |
| Low-fuel consumption performance | 100 | 105 | 100 | 97 |

Form the test results, it was confirmed that, as compared with the comparative example, the tires according to the present disclosure were improved in steering stability performance while maintaining comparable wear resistance performance, and exhibited excellent noise performance and low-fuel consumption performance.

STATEMENT OF THE PRESENT DISCLOSURE

The present disclosure is as follows:

Disclosure 1. A tire comprising a tread portion provided with circumferential grooves extending in the tire circumferential direction, wherein

when the tire mounted on a normal rim and inflated to a normal internal pressure is contacted with a horizontal flat surface at a camber angle of 0 degree and loaded with a normal load,
the tread portion has a ground contact area having ground contact lengths in the tire circumferential direction associated with respective positions in the tire axial direction, and
a half tread width which is a distance from the tire equator to a tread edge which is the axially outermost end of the ground contact area, and
the ground contact lengths include
a crown ground contact length LC at the tire equator, and a shoulder ground contact length at a position spaced apart from the tire equator by an axial distance of 80% of the half tread width,
wherein

the crown ground contact length LC is 0.95 to 1.05 times the shoulder ground contact length, and groove depths of the circumferential grooves are proportional to ground contact lengths of the ground contact area at the respective axial positions of the circumferential grooves.

Disclosure 2. The tire according to Disclosure 1, wherein

the ground contact lengths include a first ground contact length at a first axial position spaced apart from the tire equator, and a second ground contact length at a second axial position axially outside the first axial position, wherein
in a meridian cross section of the tire mounted on the normal rim, inflated to the normal internal pressure and loaded with no tire load,
when
a reference virtual groove having a predetermined groove depth d0 is defined at the tire equator,
a first virtual groove is defined at the first axial position,
a second virtual groove is defined at the second axial position, and
a virtual line is defined so as to contact with a groove bottom of the reference virtual groove, a groove bottom of the first virtual groove, and a groove bottom of the second virtual groove,

then
the groove depth of each circumferential groove is in a range from 90% to 110% of the distance from the radially outer surface of the tread portion to the virtual line at the axial position of said each circumferential groove, wherein
the groove depth d1 of the first virtual groove and the groove depth d2 of the second virtual groove are determined based on the following equations (1) and (2):

$$d1 = (L1 \times d0)/\{L1 + \alpha(LC-L1)\} \text{ --- } (1)$$

$$d2 = (L2 \times d0)/\{L2 + \beta(LC-L2)\} \text{ --- } (2)$$

wherein

d0 is the groove depth of the reference virtual groove,
LC is the crown ground contact length at the tire equator,
L1 is the first ground contact length at the first axial position,
L2 is the second ground contact length at the second axial position,
$\alpha$ is a first correction coefficient, and
$\beta$ is a second correction coefficient.

Disclosure 3. The tire according to Disclosure 2, wherein

the first axial position is spaced apart from the tire equator by an axial distance of from 40% to 55% of the half tread width, and
the second axial position is spaced apart from the tire equator by an axial distance of from 75% to 80% of the half tread width.

Disclosure 4. The tire according to Disclosure 2 or 3, wherein

the first correction coefficient $\alpha$ is 0.6 to 1.0, and
the second correction coefficient $\beta$ is 1.1 to 1.5.

Disclosure 5. The tire according to any one of Disclosures 2 to 4, wherein

the tread portion is provided with lateral grooves extending in the tire axial direction, and
the groove depth of each lateral groove at an axial position is not more than a distance from the radially outer surface of the tread portion to the virtual line at said axial position.

Disclosure 6. The tire according to any one of Disclosures 1 to 5, wherein

the circumferential grooves include an axially inner first circumferential groove and an axially outer second circumferential groove, and
the groove depth of the second circumferential groove is larger than the groove depth of the first circumferential groove.

**DESCRIPTION OF THE REFERENCE SIGNS**

| 1 | tire |
| 2 | tread portion |
| 2a | ground contact area |
| 3 | groove |
| 4 | circumferential groove |
| 5 | lateral groove |

**Claims**

1. A tire comprising a tread portion provided with circumferential grooves extending in the tire circumferential direction, wherein

when the tire mounted on a normal rim and inflated to a normal internal pressure is contacted with a horizontal flat surface at a camber angle of 0 degree and loaded with a normal load,

the tread portion has a ground contact area having ground contact lengths in the tire circumferential direction associated with respective positions in the tire axial direction, and
a half tread width which is a distance from the tire equator to a tread edge which is the axially outermost end of the ground contact area, and

the ground contact lengths include

a crown ground contact length LC at the tire equator, and
a shoulder ground contact length at a position spaced apart from the tire equator by an axial distance of 80% of the half tread width,
wherein

the crown ground contact length LC is 0.95 to 1.05 times the shoulder ground contact length, and
groove depths of the circumferential grooves are proportional to ground contact lengths of the ground contact area at the respective axial positions of the circumferential grooves.

2. The tire according to claim 1, wherein

the ground contact lengths include a first ground contact length at a first axial position spaced apart from the tire equator, and a second ground contact length at a second axial position axially outside the first axial position, wherein
in a meridian cross section of the tire mounted on the normal rim, inflated to the normal internal pressure and loaded with no tire load,

when

a reference virtual groove having a predetermined groove depth d0 is defined at the tire equator,
a first virtual groove is defined at the first axial position,
a second virtual groove is defined at the second axial position, and
a virtual line is defined so as to contact with a groove bottom of the reference virtual groove, a groove bottom of the first virtual groove, and a groove bottom of the second virtual groove,

then
the groove depth of each circumferential groove is in a range from 90% to 110% of the distance from the radially outer surface of the tread portion to the virtual line at the axial position of said each circumferential groove,
wherein
the groove depth d1 of the first virtual groove and
the groove depth d2 of the second virtual groove are determined based on the following equations (1) and (2):

$$d1 = (L1 \times d0)/\{L1 + \alpha(LC-L1)\} \ \text{---} \ (1)$$

$$d2 = (L2 \times d0)/\{L2 + \beta(LC-L2)\} \ \text{---} \ (2)$$

wherein

d0 is the groove depth of the reference virtual groove,
LC is the crown ground contact length at the tire equator,
L1 is the first ground contact length at the first axial position,
L2 is the second ground contact length at the second axial position,
$\alpha$ is a first correction coefficient, and
$\beta$ is a second correction coefficient.

3. The tire according to claim 2, wherein

the first axial position is spaced apart from the tire equator by an axial distance of from 40% to 55% of the half tread width, and
the second axial position is spaced apart from the tire equator by an axial distance of from 75% to 80% of the half tread width.

4. The tire according to claim 2 or 3, wherein

the first correction coefficient $\alpha$ is 0.6 to 1.0, and
the second correction coefficient $\beta$ is 1.1 to 1.5.

5. The tire according to any one of claims 2 to 4, wherein

the tread portion is provided with lateral grooves extending in the tire axial direction, and
the groove depth of each lateral groove at an axial position is not more than a distance from the radially outer surface of the tread portion to the virtual line at said axial position.

6. The tire according to any one of claims 1 to 5, wherein

the circumferential grooves include an axially inner first circumferential groove and an axially outer second circumferential groove, and
the groove depth of the second circumferential groove is larger than the groove depth of the first circumferential groove.

FIG.1

EP 4 015 245 A1

# FIG.2

EP 4 015 245 A1

FIG.3

# FIG.4

FIG.5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/171554 A1 (YOKOHAMA RUBBER CO LTD [JP]) 12 September 2019 (2019-09-12) | 1,6 | INV. B60C11/03 B60C99/00 |
| A | * figure 5; table 1 * | 2-5 | |
| X | US 6 443 199 B1 (SCARPITTI ANTHONY JOHN [US] ET AL) 3 September 2002 (2002-09-03) | 1,6 | |
| A | * column 5, line 58 – column 10, line 35; figures 3c,4c,5-8 * | 2-5 | |
| A | EP 3 173 254 A1 (CONTINENTAL REIFEN DEUTSCHLAND GMBH [DE]) 31 May 2017 (2017-05-31) * paragraph [0012] – paragraph [0014]; figure 1 * | 1-6 | |
| A | US 2014/083584 A1 (SCHILLER ROBERT [DE] ET AL) 27 March 2014 (2014-03-27) * paragraphs [0002], [0008], [0041]; figure 3 * | 1-6 | |

TECHNICAL FIELDS
SEARCHED      (IPC)

B60C

The present search report has been drawn up for all claims

| Place of search | Date of completion of the search | Examiner |
|---|---|---|
| Munich | 23 March 2022 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 20 3853

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2022

| Patent document cited in search report | | Publication date | Patent family member(s) | | Publication date |
|---|---|---|---|---|---|
| WO 2019171554 | A1 | 12-09-2019 | JP | 6729809 B2 | 22-07-2020 |
| | | | JP | WO2019171554 A1 | 16-04-2020 |
| | | | WO | 2019171554 A1 | 12-09-2019 |
| US 6443199 | B1 | 03-09-2002 | NONE | | |
| EP 3173254 | A1 | 31-05-2017 | DE | 102015223537 A1 | 01-06-2017 |
| | | | EP | 3173254 A1 | 31-05-2017 |
| US 2014083584 | A1 | 27-03-2014 | CN | 204077256 U | 07-01-2015 |
| | | | EP | 2527163 A1 | 28-11-2012 |
| | | | ES | 2509642 T3 | 17-10-2014 |
| | | | US | 2014083584 A1 | 27-03-2014 |
| | | | WO | 2012159809 A1 | 29-11-2012 |

EPO FORM P0459

For more details about this annex : see Official Journal of the European Patent Office, No. 12/82

## REFERENCES CITED IN THE DESCRIPTION

**Patent documents cited in the description**

- JP 2019182339 A